# EUROPEAN PATENT APPLICATION

(11) **EP 4 575 171 A1**
(43) Date of publication of application: **25.06.2025**
(21) Application number: 24221085.4
(22) Date of filing: 18.12.2024
(51) Int. Cl.: E06B 3/964, E04D 13/03

(54) **A CORNER ASSEMBLY AID FOR A SASH OF A ROOF WINDOW, A ROOF WINDOW, AND A METHOD FOR ASSEMBLY OF A SASH FOR A ROOF WINDOW**

(30) Priority: 18.12.2023 DK PA202370625
(71) Applicant: VKR Holding A/S, 2970 Hørsholm (DK)
(72) Inventor: Nygaard, Michael, 2970 Hørsholm (DK); Lysemose, Jacob, 2970 Hørsholm (DK)
(74) Representative: AWA Denmark A/S

(57) **Abstract**

A corner assembly aid for a sash of a roof window is disclosed. It comprises a backbone defining a longitudinal axis of the corner assembly aid and a corner fitting support having a first support section and a second support section. Each of the first support section and the second support section protrudes from the backbone, perpendicular to the longitudinal axis, and the first support section and the second support section together form a corner fitting support surface. In a roof window the backbone of the corner assembly aid is arranged between a first sash member and a second sash member with the first support section and the second support section extending along the two sash members, and a corner fitting resting on the corner fitting support surface is connected to the first sash member and to the second sash member.

## Description

### Field of the invention

The present invention relates to a corner assembly aid for a sash of a roof window, to a roof window with a sash comprising sash members interconnected by a corner fitting, and to a method for assembly of a sash for a roof window using a corner fitting.

### Background art

Assembly of a sash, for example for a roof window, requires joining of individual sash members at an angle to produce each corner of the sash. This can be cumbersome, and improper joining of the ends of the sash members may, in addition to affecting the appearance of the sash, make the sash more susceptible to deterioration and water penetration.

Corner fittings are used for reinforcing sash corner joints and have been known for a long time.

One example is known from FR472784A, which describes the making of a wooden window sash with a metal corner fitting. The corner fitting is inserted in grooves in wooden sash members and nails are driven through notches in the corner fitting, thereby forming tongues which anchor themselves in the wood.

This corner fitting is not well suited for use with sash members made from profiles made for example from metal.

Another and somewhat more complex example is known from EP0644312A2, which describes a corner fitting for connection of sash members made from hollow profiles with ends cut at 45°. Two flat and superposed angle bars are inserted into the ends of two adjoining sash members, and said sash members are tightened to one another through a tensioning screw and engagement means hooking into openings in sash members.

A drawback of the latter corner fitting is that there is a risk that the profile sash members, made for example by extrusion, are not properly aligned and/or inadequately joined together, making the sash members susceptible to deterioration and the sash susceptible to water penetration. Furthermore, this corner joint also has the drawback that the joining of two sash members with the corner fitting requires hollow close profiles where the corner fitting can engage opposite inner sides of the hollow closed profiles. Thereby trading an efficient utilization of space for a strong joining of the sash members.

### Summary of the invention

With this background it is therefore an object of the invention to provide a corner assembly aid and a method for assembly of a sash for a roof window, which is suitable for use with profile sash members, and which contributes to a precise interconnection of sash members.

In a first aspect of the invention this and further objects are achieved by a corner assembly aid for a sash of a roof window, said corner assembly aid comprising a backbone defining a longitudinal axis of the corner assembly aid and a corner fitting support having a first support section and a second support section, where each of the first support section and the second support section protrudes from the backbone, said first support section extending along a first width axis and said second support section extending along a second width axis, each of said width axes being perpendicular to each other and to the longitudinal axis, and where the first support section and the second support section together form a corner fitting support surface.

The first support section and the second support section together form a corner fitting support surface extending between the first width direction and the second width direction and being perpendicular to the longitudinal axis.

In other words, the corner fitting support surface forms a corner fitting rest, where the corner fitting rest is defined by a plane extending across the area between the first and second support sections which protrude from the backbone perpendicularly to the longitudinal axis and delineate the surface area of the corner fitting rest.

Providing the corner assembly aid with a backbone and corner fitting support sections, allows for a precise connection of the sash members at an angle in a compact manner that efficiently aids and guides the correct assembly of the sash members. The first and second support sections are located at substantially the same longitudinal position on the backbone, and thereby together form a corner fitting support surface for placing the corner fitting on. When the backbone extends vertically, the corner fitting support surface extends horizontally, and the corner fitting will rest on the corner fitting support surface under the influence of gravity.

The corner fitting may rest on the corner fitting support surface during fastening of the corner fitting to the sash members, thereby facilitating assembly of the sash.

In an embodiment of the first aspect the corner assembly aid comprises at least one pair of connector arms protruding from the backbone, where each connector arm defines a connector axis extending perpendicular to the longitudinal axis and parallel to the width axes, and where said connector axes intersect at the backbone.

Each of the connector arms can be placed into a complementary groove in a sash member and thereby connect the corner assembly aid to the sash members, thereby further facilitating the assembly of sash members of a roof window. The connector arms protrude from the backbone, guiding the end of the sash member towards each other, and arranging them with the same angle in relation to each other as the connector arms, possibly into a position where they abut the backbone. The connector arms intersect at the backbone, preferably at a 90° angle to form a rectangular sash when the sash members are connected to the corner assembly aid.

It is to be understood that the corner fitting will be the primary load-bearing element of the corner joint, whereas the connector arms may serve only a as guides during assembly of the sash. In some embodiment the connector arms will also contribute to a fixation of the corner joint in the assembled state, and/or may serve to transmit loads from one sash member to the other.

In another embodiment of the first aspect the corner assembly aid comprises two pairs of connector arms, where the connector axes of a first pair intersect at a first longitudinal position on the backbone, and the connector axes of a second pair intersect at a second longitudinal position.

Two pairs of connector arms will provide for a stronger and more reliable connection between a sash member and the corner assembly aid. The second pair of connector arms will also further facilitate easier guided insertion of the connector arms into the grooves of the sash members. The provision of two pairs of connectors arms arranged at a distance from each other along the longitudinal axis may also contribute to an alignment of sash members.

In another embodiment of the first aspect the corner assembly aid comprise that said first and second longitudinal positions are located on opposite sides of the corner fitting support.

Providing the connector arms on opposite sides of the corner fitting support further contributes to the precise connections of the corner assembly aid to the sash members, and thus by extension, the connection between the sash members. In this embodiment the load transfer provided by the corner fitting will be positioned towards the centre of the corner assembly aid seen along the longitudinal axis, and the guiding and/or fixating function of the connector arms will be found on opposite sides of the corner fitting, thereby contributing to a proper alignment of the sash members. Incorrect connection of the sash members at troublesome areas like near the edges of the corner joint, may for example lead to small openings for water to enter the window structure, and it may therefore be preferred that the connector arms are provided close to the ends of the backbone. The arrangement of the connector arms provided on opposite sides of the corner fitting support thus contributes to an evenly distributed tight connection of the sash member across the entire length of the corner joint, thus leading to an even easier correct assembly of the sash members.

In another embodiment of the first aspect the corner fitting support further comprises at least one insertion stop, where the corner fitting support surface and the insertion stop(s) delimit a corner fitting space for accommodating a corner fitting, said corner fitting space preferably being distanced from the backbone. The addition of insertion stops combined with the corner fitting support surface delimiting a corner fitting space, serving as a designated space for the correct placement of the corner fitting, such that the corner fitting can easily be placed in the intended position for being fastened to the sash members by inserting the corner fitting until contact with the insertion stop. Thereby providing a fixed space for housing the corner fitting and facilitating an even easier assembly of the sash members. This contributes to a precise positioning of the corner fitting on the corner fitting support surface.

The insertions stop(s) may be located on the support sections.

In a further embodiment of the first aspect where a waterflow space is present between the corner fitting space and the backbone, said waterflow space being in communication with at least one water drainage opening in or adjacent to the corner fitting support. The waterflow space may be configured for receiving any water flowing along the backbone along a waterflow path, and further guiding the water into water drainage openings. The water drainage openings are preferably located such that any water entering them will drain out onto the roof. Only small amounts of water are expected to be present, caused for example by condensation or water being pressed through microscopic openings between sash member or between a sash member and the corner assembly aid. By facilitating the drainage of water, the design mitigates the possibility of water retention at the corners of the window, which can weaken the structural integrity over time. The design contributes to the prolonged lifespan of the roof window. Reduced exposure to standing water diminishes the need for frequent maintenance, lowering the probability of water-related issues and minimizing repair costs.

In a another embodiment of the first aspect the corner fitting support further comprises a support overhang, where the support overhang is connected to the backbone at a distance from the first and second support sections along the longitudinal axis, said first and second support sections and said support overhang delimiting a corner fitting space for accommodating a corner fitting. The support overhang will contribute to keeping the corner fitting on the corner fitting support surface, and, as described above, a corner fitting space will help arrange the corner fitting in the intended position on the corner fitting support surface. By combining an insertion stop and a support overhang a three-dimensional space delimited by the support sections, the insertion stops and the support overhang. This provides for an even easier and secure placement of the corner fitting to be connected to the sash members of the window. Thereby, further aiding in the correct assembly of the window sash.

It is to be understood that terms such as "up", "down", "over", "under", "left-hand", "right-hand", "exterior", "interior", "outer", "inner" are relative and refers to the viewpoint in question. For example, the support overhang is located "over" the corner fitting support relative to the position of the corner fitting support in the assembled state of a window. Turning the corner assembly aid or roof window upside down or otherwise relocating the placement of the support overhang should not take away from this meaning.

In a second aspect of the invention the object of the invention is achieved with a roof window comprising a frame, a sash, and a pane,
where the frame comprises a set of frame members including a first pair of substantially parallel frame members and a second pair of substantially parallel frame members,
where the sash comprises a set of sash members including a first pair of sash members which are substantially parallel, a second pair of sash members, which are substantially parallel, at least one corner fitting, and at least one corner assembly aid according to the first aspect of the invention,
where the backbone of the corner assembly aid is arranged between a first sash member of the first pair and a second sash member of the second pair with the first support section and the second support section each extending along one of these two sash members, and
where the corner fitting rests on the corner fitting support surface and is connected to the first sash member and to the second sash member.

By providing the corner assembly aid in a roof window, a simplified assembly of the sash as described above with reference to the first aspect is achieved, and a more the sash members are connected in a precise manner, which enhances the structural integrity of the sash. By providing a precise and rigid connection of the sash members, the window sash becomes more robust, reducing the risk of deformation, warping or misalignment over time as well as deterioration, for example to the frame, caused by water penetration.

The skilled person will understand that a substantially parallel first pair of sash members and a substantially parallel second pair of sash members, the two pairs combined will make up an assembled sash substantially in a rectangular shape.

Further, is it to be understood that the corner fitting resting on the corner fitting support surface in the roof window may be refer to the corner fitting fastened to the sash members, even though the corner fitting may be lifted wholly or partially from the corner fitting support surface during assembly of the sash.

In an embodiment of the second aspect each of the connector arms is arranged in a groove of a sash member, and each connector arm is engaged by a male part of the sash member, said male part interlocking with a female part of the connector arm, preferably where the male part is a deformation on the sash member.

By the sash members being interlocked with the corner assembly aid, there is provided elements which serve to further secure the connection to the sash members. This may allow the connector arms to transmit loads from one sash member to another, and/or prevent unintentional separation of the sash members from the corner assembly aid, for example during assembly.

The connector arms may comprise a female part to be engaged by a male part in the groove. It is to be understood that the connector arms may comprise the male part or the female part, and similarly the groove may comprise the male part or the female part, as long as the groove and the connector arm possess complementary engagement parts to form the engagement.

The engagement between each connector arm and the groove of a sash member may be achieved by merely positioning the connector arms into the grooves and thereby achieving a preliminary connection before the corner fitting is fastened to the sash members. Such an engagement will facilitate an easy connection and hold the sash members in place and connected to the corner assembly aid while the corner fitting is fastened to the sash members.

The male part may comprise a jut configured to engage the female part by a spring bias pushing the jut into the female part when the connector arm is provided in the groove.

The female part may be a dent or pit configured for receiving the male part.

The male part may comprise a deformation on the sash member locking the connector arm into place.

Further may the engagement of the connector arm in the groove be facilitated by an adhesive provided in the groove to stick to or harden around the connector arm when providing the connector arm into the groove.

In some embodiments, where the corner assembly aid comprises two pairs of connector arms, may the sash members be connected to the backbone by deformation of the flange of the sash members into only the first or the second pair of the connector arms. This may for example be the case in smaller roof windows, where the forces affecting the corner joint is subject to relatively low loads.

In some embodiments may the first and the second longitudinal position on the backbone exhibit an equal or symmetrical distance from a respective opposite end of the backbone. In this embodiment, the connection of the sash members with the backbone may be provided by the first pair of connector arms being initially connected with the sash members while the window is oriented on one side. Subsequently, the window is flipped or reversed, allowing for the second pair of connector arms to be connected with the sash members.

Alternatively, flanges of the sash members at all connector arms may be deformed simultaneously, for example by arranging the sash members connected loosely to the corner assembly aids inside a restraining frame and using a deformation tool having one punch for each connector arm and pressing outwards towards the restraining frame at the positions of all connector arms at the same time.

The process of connecting the sash members to the corner assembly aid may be accomplished using a machine or automated equipment for deformation of one or more flanges of the sash members.

In some embodiments may the sash members be glued or adhered directly onto the backbone.

In another embodiment of the second aspect the roof window comprises a plurality of fasteners, each projecting through a sash member and into the corner fitting. The fasteners may for example be screws, bolts, rivets, or a combination thereof.

In a preferred embodiment are the sash members provided with fastener openings for the fasteners to project through into the corner fitting.

One or more sash members may be a made from a hollow profile with closed interior cells, except possibly for being open at the ends. Alternatively, or additionally, one or more sash members may be made from an open profile without interior cells.

And in yet another embodiment of the second aspect each sash member comprises an inner side facing the pane and an outer side opposite the inner side, where a ledge projects from the inner side, and where said fasteners project through the ledge. The ledge of each sash member thus serves to transmit loads from one sash member to another. The ledges may also serve to support the pane of the roof window.

The fasteners may project directly through the ledges and/or the corner fitting, but it is presently considered advantageous to provide then with fastener openings.

The fasteners projecting through fastener openings in the corner fitting and into the sash members are provided by the corner fitting space being configured for positioning the corner fitting such that the fastener openings in the sash members substantially aligning with the fastener openings in the corner fitting. These combined features enable the corner fitting space to facilitate an easy fastening procedure to the sash members while also allowing holding the corner fitting in place to ensure a correct alignment of the fastener openings in the corner fitting and the sash members.

In an embodiment of the second aspect the backbone forms part of an outer surface of the sash, projecting between the sash members at the corner joint. The corner joint will thus be provided with an improved protection from the environment and long term reliability by being insulated by the backbone. In this way will a window sash assembly where the backbone will be constituting a delimiting joint structure between the ends of the sash members be provided. Thereby, the corner joint will have improved protection from the environment to decrease deterioration and exposure of the ends of the sash members. Furthermore, any irregularities in the end surfaces of the sash members may potentially be hidden from view by the backbone. If the sash members are made from profiles with a surface covering, such as paint, and have been cut to length, thereby interrupting the surface covering, the backbone may cover the end surface exposed by the cut.

As explained above with reference to the first and second aspect of the invention, the assembly of the sash for a roof window is simplified and made easier with the use of the corner assembly aid and corner fitting.

In a third aspect of the invention the object of the invention is achieved with a method for assembly of a sash for a roof window where the sash comprises
a set of sash members including a first pair of sash members, which are substantially parallel, and a second pair of sash members, which are substantially parallel, said method comprising the steps of:
a) Providing a plurality of sash members, corner fittings, and corner assembly aids, where each corner assembly aid comprises a backbone defining a longitudinal axis of the corner assembly aid and a corner fitting support having a first support section and a second support section, where each of the first support section and the second support section protrudes from the backbone, perpendicular to the longitudinal axis, and where the first support section and the second support section together form a corner fitting support surface;
b) Arranging a first corner assembly aid between a first sash member of the first pair and a second sash member of the second pair, such that the first and second support sections each extend along one of these two sash members connecting the first sash member and the second sash member at an angle to form a corner of the sash;
c) Arranging the corner fitting on the corner fitting support surface and using fasteners for connecting the corner fitting to the first sash member and the second sash member to fixate the corner of the sash;
d) Repeating the steps b) and c) to form and fixate one or more further corners of the sash.

In this way the sash for a roof window may be assembled with an enforced connection of the sash members by providing and fastening the corner fitting to the sash members and thereby strengthening the corner assembly. The corner assembly comprises the corner assembly aid, positioning and supporting the corner fitting during assembly and connected to a first sash member and a second sash member in the assembled state. The first and second sash members connected with the corner assembly aid are thus joined at an angle through the connection with the corner assembly aid.

In one embodiment of the third aspect is the corner assembly aid provided with at least one pair of connector arms protruding from the backbone, where each connector arm defines a connector axis extending perpendicular to the longitudinal axis, and where said connector axes intersect at the backbone, said method further comprising the steps of:
e) Connecting a first corner assembly aid to a first sash member by arranging one of the connector arms of a pair of connector arms in a groove of the first sash member and in engagement with a male part of the first sash member, such that said male part interlocks with a female part of the connector arm;
f) Connecting the first corner assembly aid connected with the first sash member to a second sash member by arranging the other of the connector arm of the pair of connector arms in a groove of the second sash member and in engagement with a male part of the second sash member, such that said male part interlocks with a female part of the other connector arm.

This enables the connection of the sash members to the corner assembly aid by engaging a male part with a female part and thereby interconnecting the sash members at an angle to form a corner.

In an embodiment of the third aspect, the method comprises where the male part of at least one sash member is made during the assembly of the sash by deforming the sash member.

By deforming a sash member into a locked position into or around a connector arm, the connection of the corner assembly aid and the sash member is enforced. The deformation acts as a male part engaging a female part in the connector arms, thereby interlocking the sash member and the connector arm together.

Embodiments and advantages described with reference to one aspect of the invention also apply to the other aspects of the invention unless otherwise stated.

### Brief description of drawings

In the following the invention will be described in more detail with reference to the schematic drawing, where
Fig. 1 shows a rear perspective view of a corner assembly aid with a corner fitting, 1A, and without a corner fitting, 1B,
Fig. 2 shows a perspective frontal view of a corner assembly aid,
Fig. 3 shows a perspective view of a corner fitting with fasteners, 3A, and without fasteners, 3B,
Fig. 4a shows a perspective view of a roof window,
Fig. 4b shows a perspective view of three roof windows mounted side by side,
Fig. 5 shows an enlarged perspective view of a corner of the roof window in Fig. 4,
Fig. 6 shows a profile view of a sash member,
Fig. 7 shows an enlarged view of the corner of the roof window in Fig. 5 with one sash member removed, and
Fig. 8 shows an inner perspective view of a corner of a sash of a roof window,
Fig. 9 shows a rear perspective view of a corner assembly aid without a corner fitting, 9A, a corner fitting, 9B, and with the corner assembly aid with the corner fitting, 9C,
Fig. 10 shows a perspective view of a corner fitting with a rounded corner
Fig. 11 shows an inner perspective cross sectional view of a corner sash of a roof window, 11A, and an enlarged view of the corner assembly aid of a corner sash 11B,
Fig. 12 shows a top plan cross sectional view of a corner sash of a roof window, 12A, and an enlarged view of the corner assembly aid in a corner sash 12B,
Fig. 13 show perspective views of an end portion of a corner assembly aid connected to one sash member, 13A and 13B, and connected to two sash members 13B.

### Detailed description of the invention

In the following detailed description, preferred embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations.

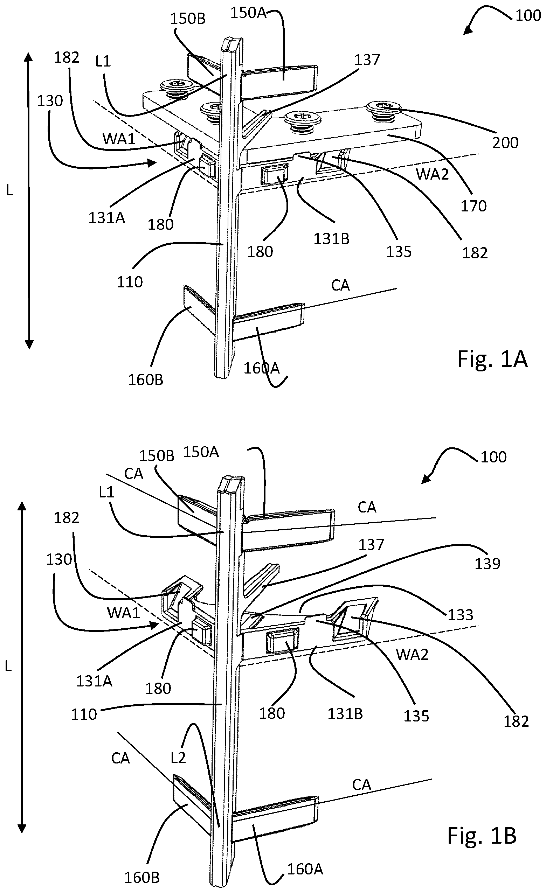

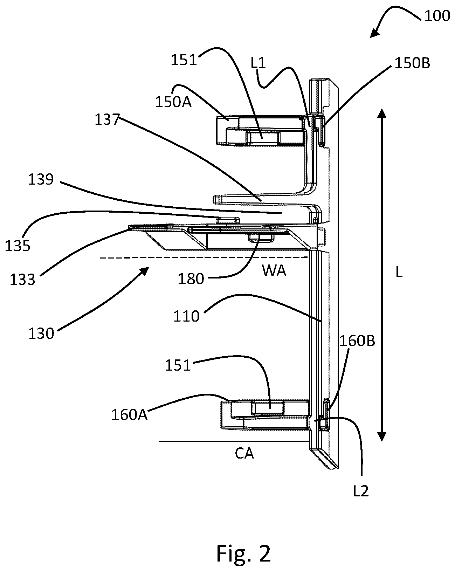

Referring to figures 1 to 3, an embodiment of a corner assembly aid 100 for a sash of a roof window and a corner fitting 170.

The corner assembly aid 100 comprises a backbone 110, which defines a longitudinal axis L of the corner assembly aid, and a corner fitting support 130.

The corner fitting support 130 has a first support section 131A and a second support section 131B. Each of the support sections 131A, 131B are protruding from the backbone 110 where said first support section is extending along a first width axis WA1 and said second support section is extending along a second width axis WA2, and where each of said width axes are perpendicular to each other and to the longitudinal axis L. Together the corner fitting supports form a corner fitting support surface 133.

In this embodiment, the corner fitting support 130 has an insertion stop 135 on each support section 131A, 131B which insertion stops protrude along the longitudinal axis L to provide backstops for the inserted corner fitting 170. The backstops make it so that the corner fitting 170 is not able to be placed closer to the backbone 110 on the corner fitting support surface 130 than intended. In some embodiments when the corner fitting 170 abuts the insertion stops 135 there is provided a distance between the corner fitting 170 and the backbone 110. The insertion stops may be embodied differently from what is shown, as long as they serve to stop an insertion of the corner fitting, and it is possible to have only a single insertion stop, possibly spanning from one support section 131A to the other 131B.

The corner fitting support surface 133 and the insertion stops 135 delimit a corner fitting space 139 in a plane perpendicular to the longitudinal axis L which houses the corner fitting 170 in the assembled state shown in Fig. 1A. The corner fitting space 139 is in a preferred embodiment distanced from the backbone 110.

The exact size and shape of the corner fitting support surface 133 may be different from what is shown and may depend on the size and shape of the corner fitting 170.

In the embodiment shown the corner fitting space is further delimited by a support overhang 137, which is connected to the backbone 110 at a distance from the first and second support sections 131A, 131B along the longitudinal axis L.

As is seen in Fig. 1A the provision of the corner fitting space 139 allows a precise positioning of the corner fitting relative the backbone 110.

The corner fitting 170 comprises fastener openings 171 where fasteners 200 are provided for connecting the corner fitting 170 with sash members of a roof window, thereby interconnecting the sash members in a corner configuration as will be described later.

Two pairs 150, 160 of connector arms 150A, 150B; 160A, 160B which protrude from the backbone 100. Each connector arm defines a connector axis CA (shown only in Fig. 1B) which extend perpendicularly to the longitudinal axis L and in parallel to a respective width axis. The connector axes CA of each pair intersect at the backbone 110. The connector axes CA of the first pair 150 intersect at a first longitudinal position L1 on the backbone 110 and the connector axes CA of the second pair 160 intersect at a second longitudinal position L2. The first and the second longitudinal positions L1, L2 are located on opposite sides of the corner fitting support 130.

In some embodiments, may the corner assembly aid 100 have one pair of connector arms, and in other embodiments may the corner assembly aid 100 not have any connector arms.

The connector arms 150A, 150B; 160A, 160B each have a female part 151 configured for interacting with a male part located in a groove in a sash member to aid in connecting the connector arms to sash members as will be described later.

The corner assembly aid shown further comprises abutment members 180 abutting on the sash members in the assembled state, whereby keeping the corner assembly aid and consequently also the corner fitting at an intended distance from an inner side of each sash member. The abutment members 180 provide a small area of contact between the corner assembly aid 100 and the inner side of each sash member to reduce friction and provide a smoother movement between the inner side of a sash member and the corner assembly aid 100 when connecting them. In some embodiments may the abutment members 180 be a sphere or a rounded shape to provide as small an area of contact as possible.

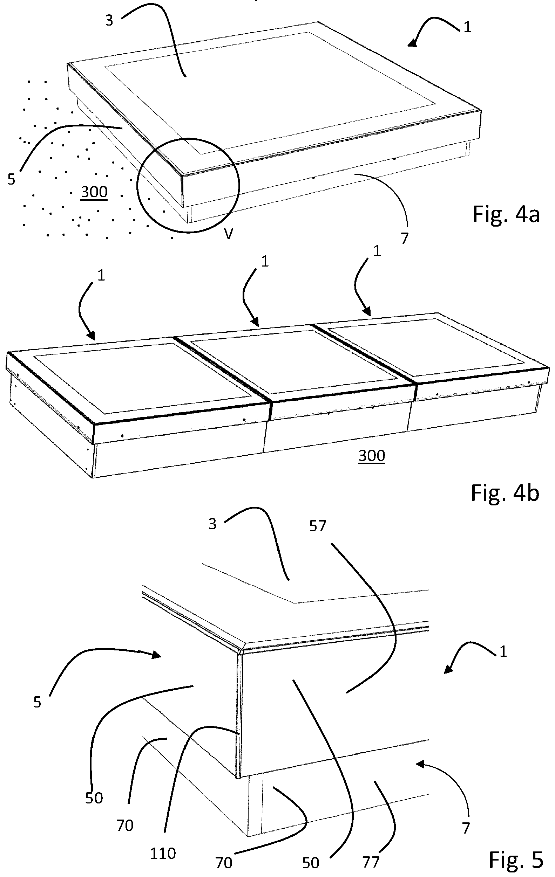

The corner assembly aid 100 shown also comprises recess profiles 182 provided on the first and second support sections 131A, 131B. The recess profiles 182 in this embodiment are in the shape of an inclined channel that gradually ascends along its length. In the assembled state of a window, the open window may exhibit a swaying motion caused by external forces, such as wind conditions, causing the open sash to be slightly out of alignment with the frame, causing difficulty in closing the window smoothly. The recess profiles 182 may serve as guides which help the sash come back into alignment with the frame when closing the window. Referring to figures 4 and 5, an embodiment of a roof window 1 comprising a frame 7, a sash 5, and a pane 3 is shown. In Fig. 4a the roof window 1 is mounted in a single installation on a roof 300, and in Fig. 4b three roof windows are mounted closely side-by-side on a roof structure 300. The detail in Fig. 5 is marked V in Fig. 4a and it is to be understood that the three roof windows in Fig. 4b are identical to the one in Fig. 4a.

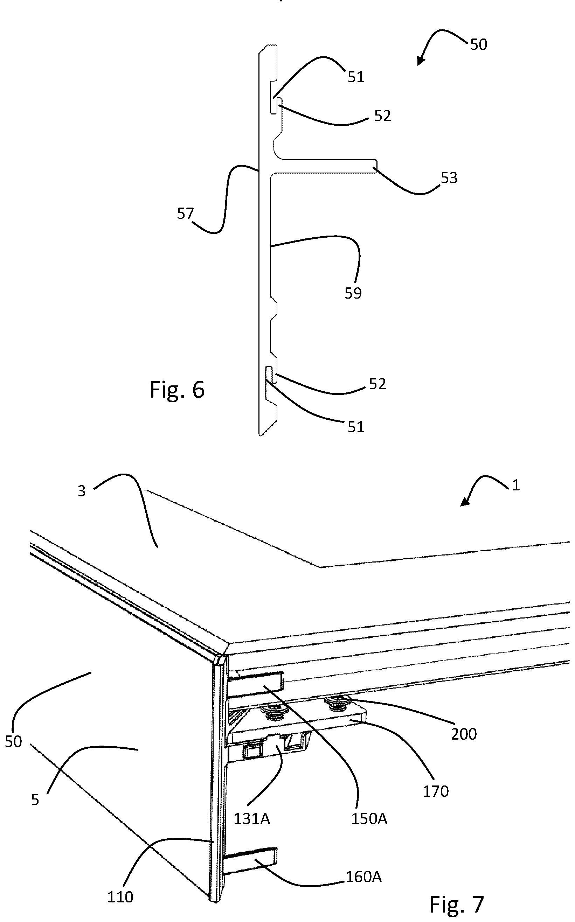

The frame 7 comprises a set of frame members 70 including a first pair of substantially parallel frame members and a second pair of substantially parallel frame members combined in a square. The sash 5 comprises a set of sash members 50 including a first pair of substantially parallel sash members and a second pair of substantially parallel sash members. The sash members 50 are combined in a square structure complementary to the frame 7. Each sash member 50 is connected to another sash member 50 through connection to the corner fitting as will be described with reference to Fig. 7 and the backbone 110 of the corner assembly aid 100 is located between ends of the sash members, forming part of an outer surface 57 of the sash. The sash 5 is located on top of the frame 7, projecting over an outer surface 77 of the frame, and provides a rim for the pane 3 supported by the sash 5.

Referring to figure 6, an embodiment of a sash member 50 made from an open profile without interior cells is shown. A profile of this type will typically be made from metal, such as aluminium, or a from a polymer, which may be fibre-reinforced, and will typically be made by extrusion.

The sash member 50 comprises an inner side 59 which faces the pane 3 and an outer side 57 which is opposite the inner side 59.

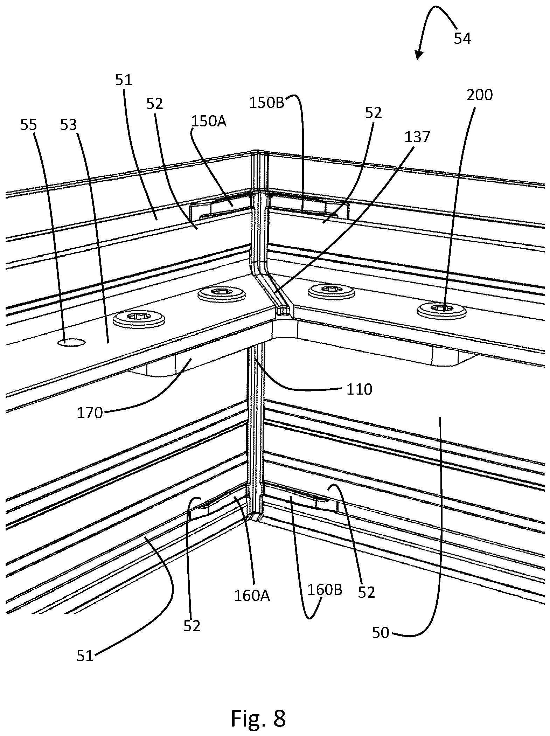

A ledge 53, which projects from the inner side 59, is provided with fastener openings 55 seen in Fig. 8 for fastening the corner fitting to the sash member 50.

Grooves 51 are provided on opposite sides of the ledge 53 and configured for receiving the connector arms 150 on the corner assembly aid 100 as shown in Fig. 8. Each groove 51 is delimited by a flange 52 protruding in opposite directions along the longitudinal axis L and extending in a length direction of the sash member 50, perpendicular to the longitudinal direction, thereby forming the grooves together with the inner side 59 of the sash member 50.

An embodiment of a corner of a roof window 1 and a sash 5 is shown in Figs 7-8. Only one corner fitting 170, one corner assembly aid 100 and one set of fasteners 200 are shown, but it is to be understood that all corners of the sash 5 may be embodied in the same way.

As also shown in Fig. 5, the backbone 110 of the corner assembly aid 100 is arranged between the two sash members 50, only one of which is shown in Fig. 7, the other being removed to show the corner assembly aid 100 and the corner fitting 170.

The first and second support sections each extend along one of these two sash members 50 and the corner fitting 170 rests on the corner fitting support surface 133. In Fig. 7 only the first support section 131A is visible, the second being hidden behind the sash member, and in Fig. 8 both support sections are hidden underneath the corner fitting 170.

The corner fitting 170 is connected to the first sash and the second sash members 50 by a plurality of fasteners 200 projecting through fastener openings 55 in the ledge 53 of the sash members 50 and into fastener openings 171 in the corner fitting 170 and thereby interconnecting them.

Each of the connector arms 150 are arranged in a groove 51 of a sash member 50 where the connector arm 150 may be engaged by a male part of the sash, interlocked with the female part 151 on the connector arm described with reference to Figs 1-3. The male part may be for example be formed by deformation of the flange 52 of the sash member so that a section of the flange projects into the female part 151 in the connector arm 150.

In order to assemble two sash members 50 in a corner 54 with the aid of the corner assembly aid 100, the corner assembly aid 100 can arranged between a first sash member 50 and a second sash member 50 such that the first and second support sections 131A, 131B each extend along one of the two sash members 50, and such that the connector arms 150, 160 of the corner assembly aid 100 are brought into grooves 51 of the sash members 50. As the support sections and the connector arms of each part extend at an angle to each other, the sash members will also extend at an angle to each other, thereby forming a first corner 54.

Now the corner fitting 170 is provided on the corner fitting support surface 133 and thereafter fasteners 200 are used to connect the corner fitting 170 to the first and the second sash member 50 to establish a fixed the corner of the sash. It is also possible to arrange the corner fitting on the corner assembly aid 100 before bringing the sash members into contact with the corner assembly aid, or to bring one sash member into contact with the corner assembly aid, then add the corner fitting, and then bringing the other sash member into contact with the corner assembly aid.

When a first corner assembly 100 has been formed may a second, third and fourth corner assembly be formed by repeating the previous steps.

If the corner assembly aid 100 comprises connector arms with female parts, each sash member 50 can be connected to the corner assembly aid by bringing the female part 151 in the connector arms 150 into engagement with a male part in the grooves 51 of the first sash member 50 and thereby interlocking the connector arms 150 with the first sash member 50.

A male part may be formed by deforming a portion the sash members 50 into a locked position around or into the female part 151 in the connector arms 150. Thereby locking a portion of the sash member 50 around or into the connector arm 150 and interconnecting the corner assembly aid 100 and the sash member 50.

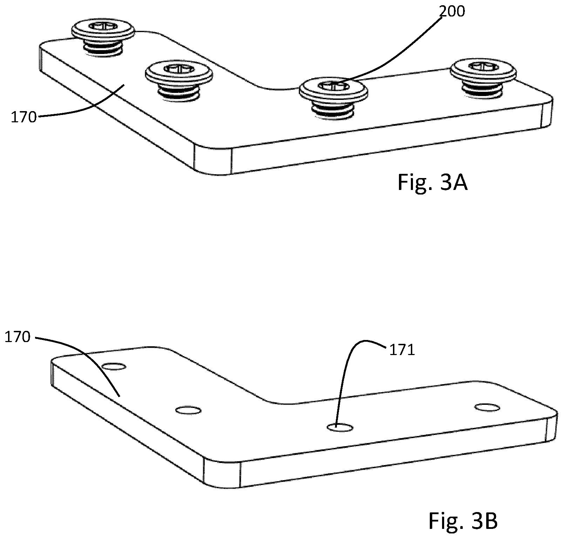

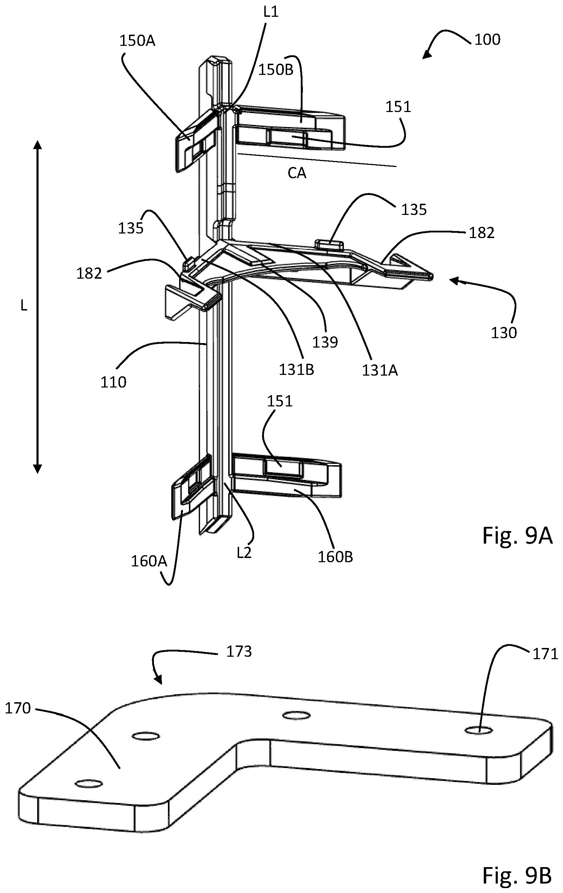

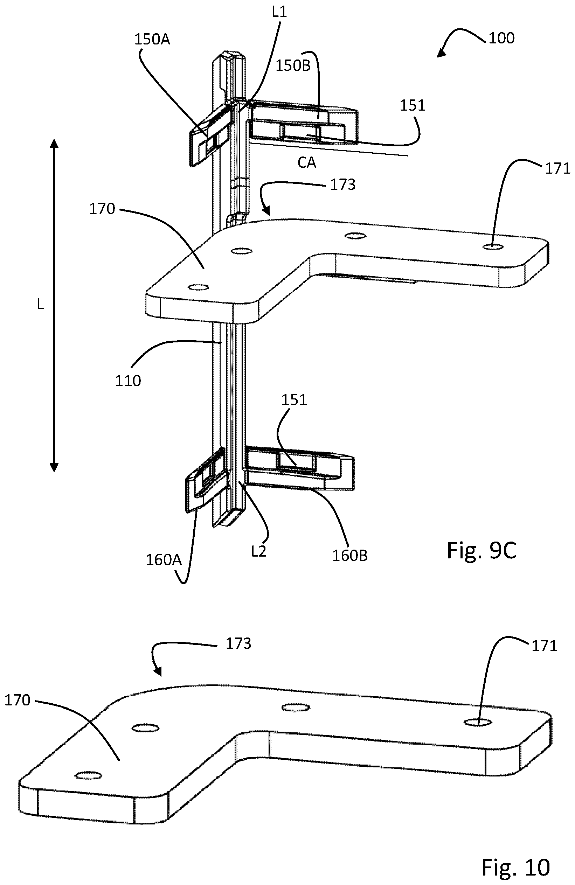

Referring to figures 9A, 9B and 10, an alternative embodiment of a corner assembly aid 100 and a corner fitting 170 is shown. In this embodiment, the corner fitting support surface 133 and the insertion stops 135 delimit a corner fitting space 139 in a plane perpendicular to the longitudinal axis L which houses the corner fitting 170 in the assembled state shown in Fig. 9B. The corner fitting space 139 in this embodiment is distanced from the backbone 110. The corner fitting 170 in this embodiment comprises a rounded corner 173 as seen in Fig. 10, which provides a further distance between the backbone 110 and the corner fitting 170, compared to a corner fitting 170 with a sharp corner as shown in Fig.3A and 3B.

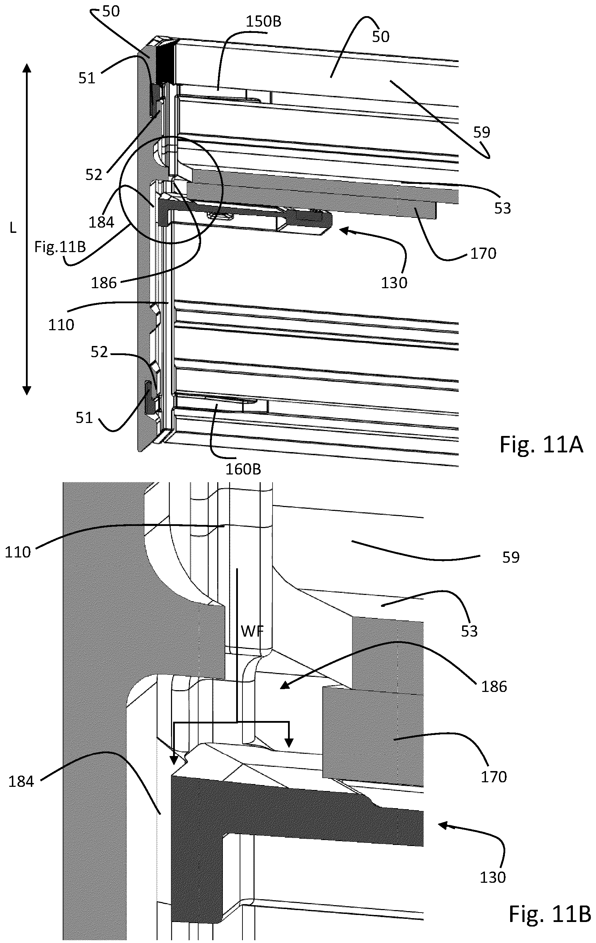

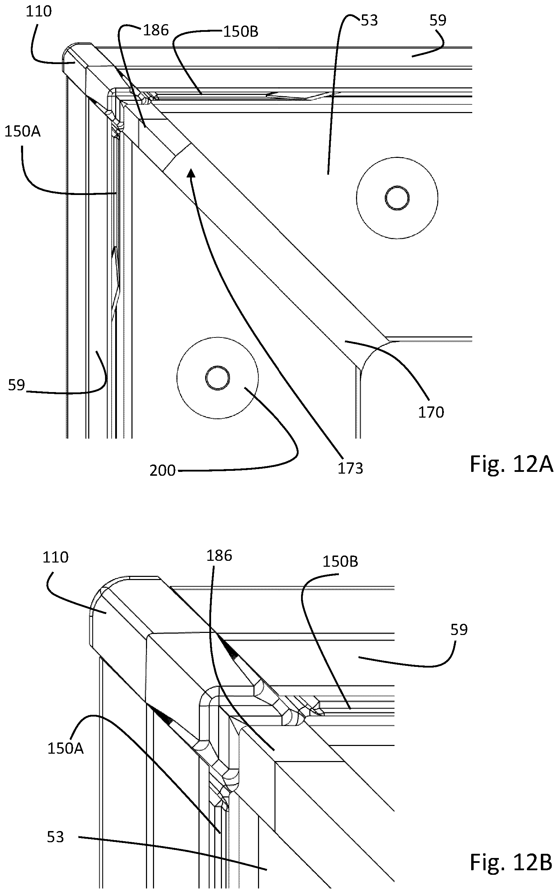

Figures 11A, 11B and 12A, 12B show an embodiment of the corner assembly aid 100 as shown in Fig. 9A connected to two sash members 50 by a plurality of fasteners 200 projecting through fastener openings in the ledge 53 of the sash members 50 and into fastener openings 171 in the corner fitting 170 thereby interconnecting them. The distance between the corner fitting space 139 and the backbone 110 provides a waterflow space 186 configured for receiving water flowing along the backbone 110 along a waterflow path WF. The water flows onto a portion of the corner fitting support surface 133 left uncovered by the corner fitting 170 due to the distance between the corner fitting space 139 and the backbone 110. The waterflow space 186 guides the water into water drainage openings 184 for drainage of water. From there the water will follow the backbone 110 or the inner side 59 of the sash member and ultimately be led onto the roof 300. While only small amounts of water are expected to be present, it is considered advantageous to be able to drain off condensation and/or water penetrating between the two sash members meeting at the joint.

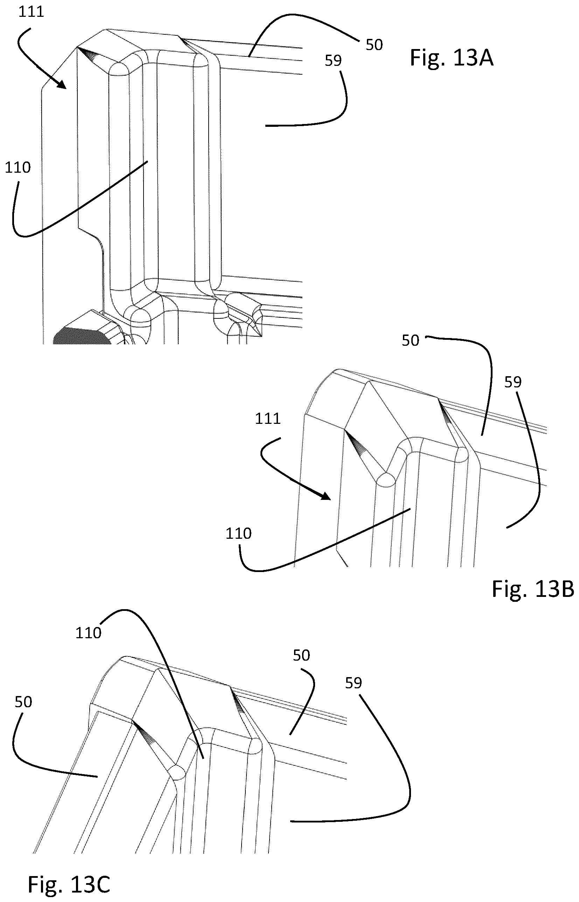

Referring to figures 13A, 13B and 13C, an embodiment of the corner assembly aid 100 comprising a backbone mortise 111 on each side of the backbone 110 is shown. The backbone mortise 111 is of a complementary shape to the end profiles of the sash members 50 such that the sash member end profile geometry fit into the backbone mortise 111 when connecting the sash members 50 with the corner assembly aid 100 as also shown in Fig. 11A and Fig. 12A.

## Claims

1. A corner assembly aid for a sash of a roof window, said corner assembly aid comprising a backbone defining a longitudinal axis of the corner assembly aid and a corner fitting support having a first support section and a second support section, where each of the first support section and the second support section protrudes from the backbone, said first support section extending along a first width axis and said second support section extending along a second width axis, each of said width axes being perpendicular to each other and to the longitudinal axis, and where the first support section and the second support section together form a corner fitting support surface.

2. A corner assembly aid according to claim 1, further comprising at least one pair of connector arms protruding from the backbone, where each connector arm defines a connector axis extending perpendicular to the longitudinal axis, and where said connector axes intersect at the backbone.

3. A corner assembly aid according to claim 2, comprising two pairs of connector arms, where the connector axes of a first pair intersect at a first longitudinal position on the backbone, and the connector axes of a second pair intersect at a second longitudinal position.

4. A corner assembly aid according to claim 3, where said first and second longitudinal positions are located on opposite sides of the corner fitting support.

5. A corner assembly aid according to one or more of the preceding claims, where the corner fitting support further comprises at least one insertion stop, where the corner fitting support surface and the insertion stop(s) delimit a corner fitting space for accommodating a corner fitting, said corner fitting space preferably being distanced from the backbone.

6. A corner assembly aid according to one or more of the preceding claims, where the corner fitting support further comprises a support overhang, where the support overhang is connected to the backbone at a distance from the first and second support sections along the longitudinal axis, said first and second support sections and said support overhang delimiting a corner fitting space for accommodating a corner fitting.

7. A roof window comprising a frame, a sash, and a pane,
where the frame comprises a set of frame members including a first pair of substantially parallel frame members and a second pair of substantially parallel frame members,
where the sash comprises a set of sash members including a first pair of sash members which are substantially parallel, a second pair of sash members, which are substantially parallel, at least one corner fitting, and at least one corner assembly aid according to one or more of claims 1-6,
where the backbone of the corner assembly aid is arranged between a first sash member of the first pair and a second sash member of the second pair with the first support section and the second support section each extending along one of these two sash members, and
where the corner fitting rests on the corner fitting support surface and is connected to the first sash member and to the second sash member.

8. A roof window according to claim 7 comprising a corner assembly aid according to claim 2 or 3, where each of the connector arms is arranged in a groove of a sash member, and where each connector arm is engaged by a male part of the sash member, said male part interlocking with a female part of the connector arm, preferably where the male part is a deformation on the sash member.

9. A roof window according to claim 7 or 8, further comprising a plurality of fasteners, each projecting through a sash member and into the corner fitting.

10. A roof window according to claim 9, where each sash member comprises an inner side facing the pane and an outer side opposite the inner side, where a ledge projects from the inner side, and where said fasteners project through the ledge.

11. A roof window according to one or more of claims 7-9, where the backbone forms part of an outer surface of the sash.

12. A roof window according to one or more of claims 7-11, where a waterflow space is present between the corner fitting space and the backbone, said waterflow space being in communication with at least one water drainage opening in or adjacent to the corner fitting support.

13. A method for assembly of a sash for a roof window, the sash comprises a set of sash members including a first pair of sash members, which are substantially parallel, and a second pair of sash members, which are substantially parallel, said method comprising the steps of:
a) Providing a plurality of sash members, corner fittings, and corner assembly aids, where each corner assembly aid comprises a backbone defining a longitudinal axis of the corner assembly aid and a corner fitting support having a first support section and a second support section, where each of the first support section and the second support section protrudes from the backbone, perpendicular to the longitudinal axis, and where the first support section and the second support section together form a corner fitting support surface;
b) Arranging a first corner assembly aid between a first sash member of the first pair and a second sash member of the second pair, such that the first and second support sections each extend along one of these two sash members connecting the first sash member and the second sash member at an angle to form a corner of the sash;
c) Arranging the corner fitting on the corner fitting support surface and using fasteners for connecting the corner fitting to the first sash member and the second sash member to fixate the corner of the sash;
d) Repeating the steps b) and c) to form and fixate one or more further corners of the sash.

14. A method according to claim 13, where each of the corner assembly aids further comprises at least one pair of connector arms protruding from the backbone, where each connector arm defines a connector axis extending perpendicular to the longitudinal axis, and where said connector axes intersect at the backbone, said method further comprising the steps of:
e) Connecting a first corner assembly aid to a first sash member by arranging one of the connector arms of a pair of connector arms in a groove of the first sash member and in engagement with a male part of the first sash member, such that said male part interlocks with a female part of the connector arm;
f) Connecting the first corner assembly aid connected with the first sash member to a second sash member by arranging the other of the connector arm of the pair of connector arms in a groove of the second sash member and in engagement with a male part of the second sash member, such that said male part interlocks with a female part of the other connector arm.

15. A method according to claim 14, where the male part of at least one sash member is made during the assembly of the sash by deforming the sash member.
